# EUROPEAN PATENT SPECIFICATION

(11) **EP 4 296 147 B1**
(45) Date of publication and mention of the grant of the patent: **30.09.2026**
(21) Application number: 23178985.0
(22) Date of filing: 13.06.2023
(51) Int. Cl.: B62D 25/16, B62D 25/18

(54) **MUDGUARD GROUP EQUIPPED WITH INTEGRATED SPLASH GUARD**
KOTFLÜGELGRUPPE MIT INTEGRIERTEM SPRITZSCHUTZ
ENSEMBLE GARDE-BOUE ÉQUIPÉ D'UN PARE-ÉCLABOUSSURES INTÉGRÉ

(30) Priority: 22.06.2022 IT 202200013198
(43) Date of publication of application: 27.12.2023
(73) Proprietor: DOMAR S.p.A., 70022 Altamura, Bari (IT)
(72) Inventor: FIORE, Pasquale, I-70022 Altamura, BARI (IT); DENTE, Daniele, I-70022 Altamura, BARI (IT)
(74) Representative: Mitola, Marco

(56) References cited:
- EP-A1- 2 100 800
- EP-A1- 3 219 587
- WO-A1-93/12966
- US-A- 4 427 208
- US-A1- 2014 151 993
- US-B1- 9 211 916

## Description

### FIELD OF APPLICATION

The present invention relates to a mudguard group comprising a mudguard equipped with a splash guard integrated into the mudguard itself.

### BACKGROUND ART

Several solutions exist in the prior art of mudguard groups provided with splash guards which are mounted to the wheels of industrial vehicles, such as trucks, lorries, trailers, vans, and the like.

Splash guards are lower legs applied to mudguards as true extensions thereof, in order to avoid the projection of liquids and stones lifted by the wheel while the vehicle is travelling.

Splash guards are manufactured separately from mudguards and then applied thereto.

The connections must be strong since the splash guards are made of rubber, PP, PVC, PE, or even other harder blends.

In general, the compounds are varied, even softer if required, but however they must respect the maximum degree of flexibility according to legislation in force. Therefore, splash guards are thinner and more flexible than the structure of mudguards and are subjected, like the latter, to the actions of weathering, in addition to the mechanical action of the bodies hitting them (typically stones and mud).

Therefore, in order to ensure strength of the connections and integrity of the splash guards over time, known solutions include a very firm coupling, typically by means of rivets. However, such solutions are inconvenient to apply and require special tools for mounting.

Reversibly removable splash guard solutions also exist in the prior art, but they still require the use of special tools and thus are inconvenient to use. Solutions of the prior art are described by WO 93/12966 A1, US 4427208 A, US 9211916 B1, EP 3219587 A1, EP 2100800 A1, US 2014/151993 A1. WO 93/12966A1 for example discloses a mudguard group according to the preamble of claim 1.

### OVERVIEW OF THE INVENTION

The need is thus felt to solve the drawbacks and limitations mentioned with reference to the prior art.

Such a need is met by a mudguard group according to claim 1 and by a method for making a mudguard group according to claim 12.

### DESCRIPTION OF THE DRAWINGS

Further features and advantages of the present invention will be more comprehensible from the following description of preferred, non-limiting embodiments thereof, in which:

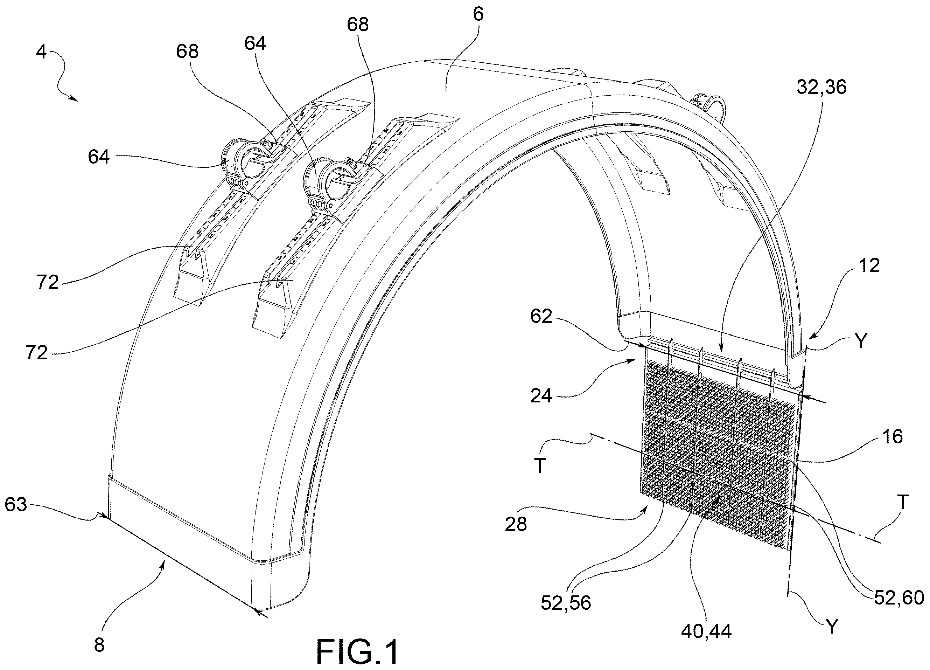

figure 1 is a front perspective view of a mudguard group with integrated splash guard, according to a first embodiment of the present invention;

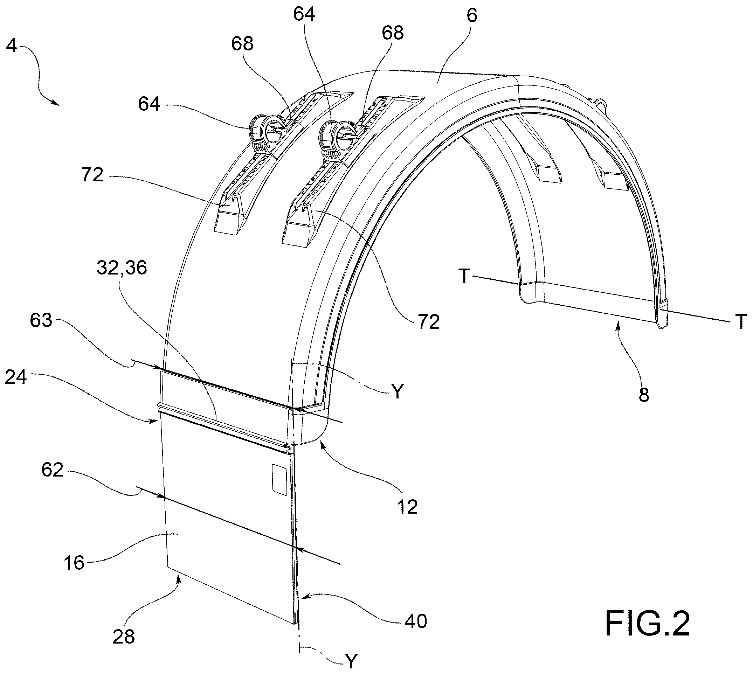

figure 2 is a rear perspective view of the mudguard group in figure 1;

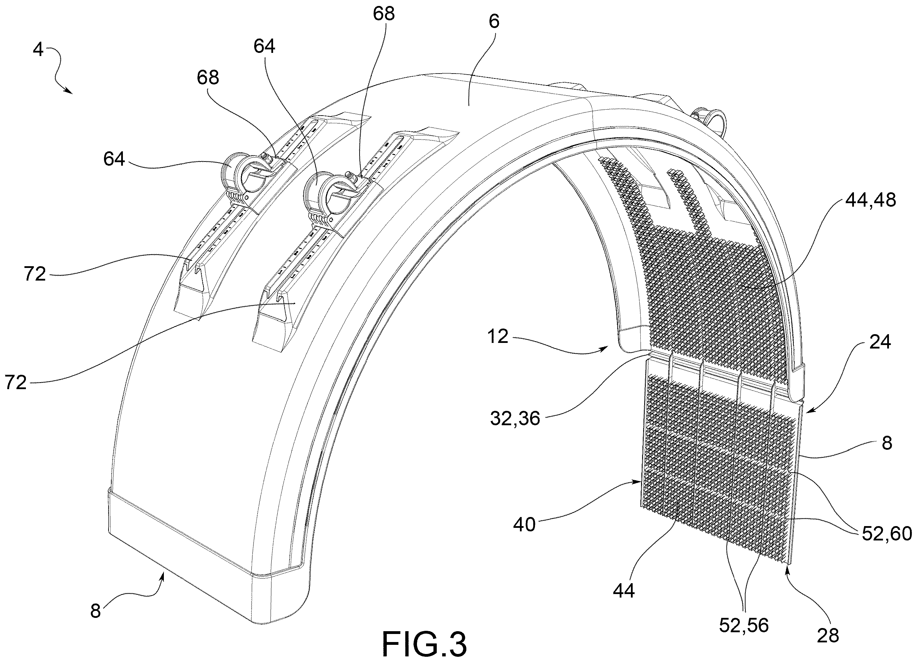

figure 3 is a front perspective view of a mudguard group according to a second embodiment of the present invention;

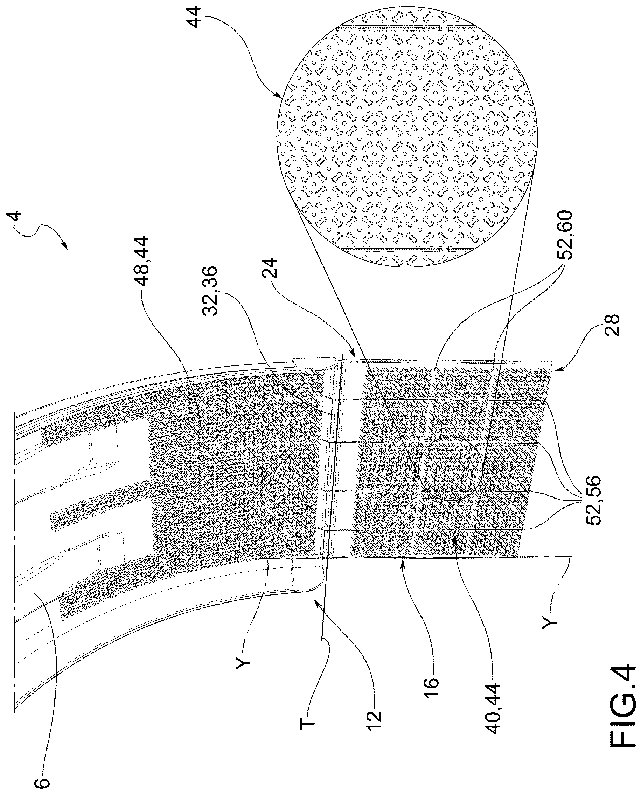

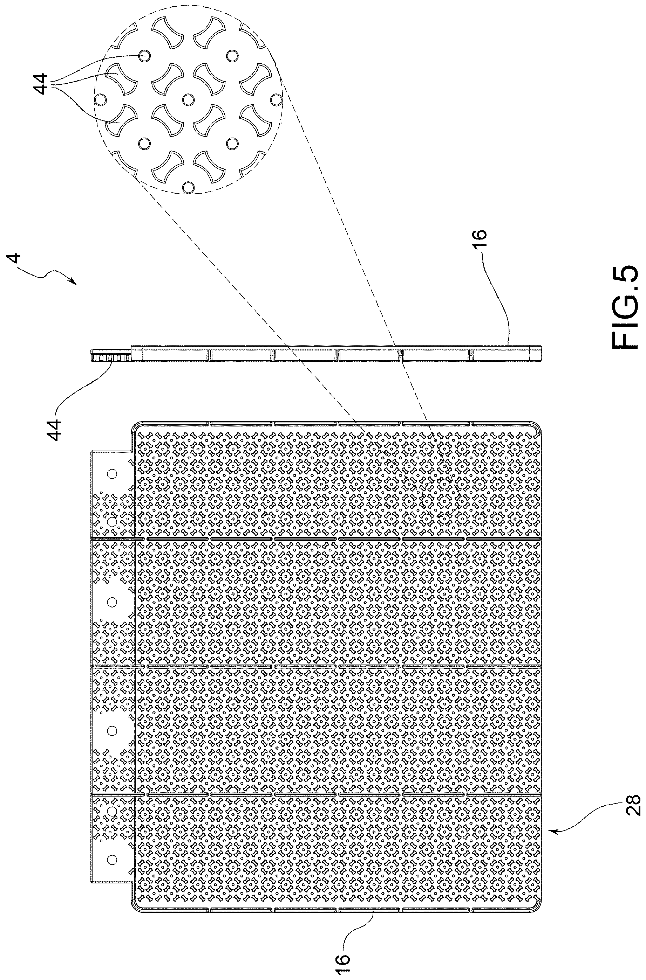

figures 4-5 depict enlarged details of possible alternative embodiments of a splash guard according to the present invention.

Elements or parts of elements common to the embodiments described below will be indicated by the same reference numerals.

### DETAILED DESCRIPTION

With reference to the aforementioned figures, reference numeral 4 indicates as a whole a mudguard group for an industrial vehicle.

As mentioned, the term "industrial vehicle" should be understood in a broad sense, comprising, by way of mere example, trucks, lorries, trailers, vans, and the like.

A mudguard group 4 comprises a mudguard 6 in the shape of an arc of a circle and extending between a front end 8 and a rear end 12, with respect to a travel direction of an associable vehicle. For the purposes of the present invention, the mudguard 6 can have any shape, size and can be made of any material, preferably plastic material.

The mudguard 6 extends at least 120° between said front end 8 and rear end 12. The mudguard 6 can usually extend, between said front end 8 and rear end 12, up to a maximum of 180°.

The mudguard group 4 further comprises a splash guard 16 associated with said rear end 12 of the mudguard 6.

The splash guard 16 extends along a vertical direction Y-Y between an upper end 24, arranged on the side of the rear end 12 of the mudguard 6, and a free lower end 28 facing the ground. The mudguard 16 thus forms a leg or extension of the mudguard 6 on the side of the rear end 12 of the latter.

According to a possible embodiment of the present invention, the splash guard 16, at said upper end 24, is curvilinear and counter-shaped with respect to the rear end 12 of the mudguard 6.

The splash guard 16 can also be straight in shape so as to be substantially tangent to the rear end 12 of the mudguard 6.

Advantageously, the splash guard 16 is co-moulded in a one piece with the mudguard 6.

According to the present invention, at said upper end 24, the splash guard 16 is connected to the mudguard 6 by means of a bellows portion 32.

Said bellows portion 32 comprises a plurality of undulations 36 extending along a transverse direction T-T perpendicular to said vertical direction Y-Y.

The splash guard 16, at an inner side 40 facing an associable industrial vehicle wheel, comprises a plurality of pegs 44 arranged along a repetitive pattern.

According to a possible embodiment of the present invention, said pegs 44 are also arranged at an inner area 48 of the mudguard 6, facing the associable industrial vehicle wheel, on the side of the rear end 12 of the mudguard 6.

Preferably, said inner area 48 has an extension greater than or equal to the splash guard 16. In general, the size of the inner area 48 of the splash guard 16 must comply with legislation in force, i.e., it must cover the inner part of the mudguard 6 up to a height identified between a half-line which, from the centre of the wheel, forms an angle of at least 30° with the horizontal axis.

For example, the pegs 44 have a cylindrical or frustoconical geometry.

According to a possible embodiment, the pegs 44 are cylinders or truncated cones with a rectangular or square section.

According to a further possible embodiment, the pegs 44 are cylinders or truncated cones with a circular section.

Preferably, said pegs 44 are spaced from one another by a distance at least equal to their height, i.e., the cantilevered portion with respect to the inner side 40 of the splash guard 16.

According to a possible embodiment, the splash guard 16, at said inner side 40, comprises a plurality of reinforcing ribs 52.

For example, the splash guard 16 comprises vertical reinforcing ribs 56, parallel to said vertical direction Y-Y, and at least one transverse reinforcing rib 60, directed along the transverse direction T-T perpendicular to said vertical direction Y-Y.

According to a possible embodiment, said vertical reinforcing ribs 56 extend up to said bellows portion 32.

The splash guard 16 is preferably made of rubber, PP, PVC, PE.

The mudguard 6 is preferably made of PP.

Preferably, the splash guard 16 has a width 62 substantially equal to the transverse dimension 63 of the mudguard 6, parallel to said transverse direction T-T.

According to possible embodiments, the mudguard 6 is further provided with fixing means to be fixed to the chassis of an associable industrial vehicle.

For example, said fixing means comprise a plurality of fixing rings 64 shaped so as to be fitted and be clamped onto appropriate fixing rods connected to the chassis of the industrial vehicle (in a known manner) .

Preferably, said fixing rings 64 are provided with rails 68 which are engaged on tangential guides 72 of the mudguard 6 so as to allow the adjustment of the position of the mudguard group 4 with respect to the wheel.

Said tangential guides 72 are preferably co-moulded with the mudguard 6.

As mentioned above, the mudguard group 4 for an industrial vehicle according to the present invention is made by injection moulding techniques.

According to the invention, the manufacturing method comprises the steps of:
- injection moulding a mudguard 6 in the shape of an arc of a circle and extending, at least 120°, between a front end 8 and a rear end 12, with respect to a travel direction of an associable vehicle,
- where said injection moulding step comprises the step of co-moulding a splash guard 16 associated with said rear end 12 of the mudguard 6, the splash guard 16 extending along a vertical direction Y-Y between an upper end 24, on the side of the rear end 12 of the mudguard 6, and a lower end 28.

According to the invention, the method comprises the step of injection moulding the mudguard 6 made of a first material and injection co-moulding the splash guard 16 made of a second material, different from the first material.

Preferably, said first material is a PP and said second material isa rubber, PP, PVC, PE.

In the moulding operation, it is also possible to co-mould the mudguard 6 so that it consists of a matrix in a first colour, typically black, and an arc-of-a-circle-shaped lateral edge, co-moulded with the matrix, in a second colour, typically white. The lateral edge is thus clearly visible in contrast and is long-lasting over time as it is not painted or superimposed but incorporated into the matrix of the mudguard 6.

As can be appreciated from the description above, the present invention allows overcoming the drawbacks presented in the prior art.

In particular, the present invention provides a mudguard with integrated splash guard; hence, no steps for separate manufacturing and related final assembly between the two components are required.

Therefore, no connection means such as rivets, screws or the like are required, neither the related assembly tools.

The length of the splash guard can vary as preferred by simply modifying the mould. Obviously, it is also possible to provide an embodiment in which said splash guard is not moulded at all.

It is also advantageously possible to make by co-moulding a splash guard integrated into the mudguard but made of a different material with respect to the latter, typically a softer and more flexible material.

In particular, the solution according to the invention allows manufacturing a reliable mudguard in which the splash guards are not compromised/damaged by impacts and vibrations, or neither by the action of weathering, stones or mud, and the like.

Moreover, the splash guard portion can be advantageously superimposed, at least partially, at the rear end of the mudguard: the water retaining properties of the splash guard are thus improved.

Finally, the mudguard according to the invention comprises a splash guard which complies with the related homologation tests i.e., which satisfies an absorption test equal to at least 70% of the water sprayed against it.

In order to meet contingent, specific needs, those skilled in the art may make several changes and variations to the solutions described above.

The scope of protection of the invention is defined by the following claims.

## Claims

1. Mudguard group (4) for industrial vehicles, comprising:
- a mudguard (6) having a shape of an arc of a circle and extending, between a front end (8) and a rear end (12), with respect to a travel direction of an associable vehicle,
- a splash guard (16) associated with said rear end (12) of the mudguard (6), the splash guard (16) extending along a vertical direction (Y-Y) between an upper end (24), from the side of the rear end (12) of the mudguard (6), and a lower end (28),
wherein the splash guard (16) is co-moulded in a single piece with the mudguard (6),
wherein the mudguard (6) extends for at least 120° between said front end (8) and rear end (12),
the mudguard group being **characterised in that**,
at said upper end (24), the splash guard (16) is connected to the mudguard (6) by means of a bellows portion (32),
wherein said bellows portion (32) comprises a plurality of undulations (36) extending along a transverse direction (T-T) perpendicular to said vertical direction (Y-Y).

2. Mudguard group (4) for industrial vehicles according to claim 1, wherein the splash guard (16) at an inner side (40) facing an associable industrial vehicle wheel, comprises a plurality of pegs (44) arranged along a repetitive pattern.

3. Mudguard group (4) for industrial vehicles according to claim 2, wherein said pegs (44) are also arranged at an inner area (48) of the mudguard (6), facing the associable industrial vehicle wheel, from the side of the rear end (12) of the mudguard (6).

4. Mudguard group (4) for industrial vehicles according to claim 3, wherein said inner area (48) has an extension greater than or equal to the splash guard (16).

5. Mudguard group (4) for industrial vehicles according to claim 2, 3 or 4, wherein said pegs (44) have cylindrical or truncoconical geometry.

6. Mudguard group (4) for industrial vehicles according to claim 5, wherein said pegs (44) are cylinders or cone-trunks with rectangular or square section.

7. Mudguard group (4) for industrial vehicles according to claim 5, wherein said pegs (44) are cylinders or cone-trunks with circular section.

8. Mudguard group (4) for industrial vehicles according to any one of claims 2 to 7, wherein said pegs (44) are spaced from each other by a distance at least equal to their height, i.e., the cantilevered portion with respect to the inner side (40) of the splash guard (16).

9. Mudguard group (4) for industrial vehicles according to claim 8, wherein said splash guard (16), at said inner side (40), comprises a plurality of reinforcing ribs (52,56,60), wherein the splash guard (16) comprises vertical reinforcing ribs (52,56), parallel to said vertical direction (Y-Y) and at least one transverse reinforcing rib (52,60), directed along a transverse direction (T-T) perpendicular to said vertical direction (Y-Y).

10. Mudguard group (4) for industrial vehicles according to claim 9 in combination with claim 1, wherein said vertical reinforcing ribs (52,56) extend up to said bellows portion (32).

11. Mudguard group (4) for industrial vehicles according to any one of claims 1 to 10, wherein the splash guard (16) is made of rubber, PP, PVC, PE.

12. Method for making a mudguard group (4) for industrial vehicles, comprising the steps of:
- injection moulding a mudguard (6) having a shape of an arc of a circle and extending, by at least 120°, between a front end (8) and a rear end (12), with respect to a travel direction of an associable vehicle,
- wherein said injection moulding step comprises the step of co-moulding a splash guard (16) associated with said rear end (12) of the mudguard (6), the splash guard (16) extending along a vertical direction (Y-Y) between an upper end (24), from the side of the rear end (12) of the mudguard (6), and a lower end (28),
the method further comprising the step of injection moulding the mudguard (6) in a first material and co-injection moulding the splash guard (16) in a second material, different from the first material, wherein said first material is a PP and wherein said second material is a rubber, PP, PVC, PE.

13. Method for making a mudguard group (4) for industrial vehicles according to claim 12, comprising the step of moulding a mudguard group (4) according to any one of claims 1 to 11.

## Patentansprüche

1. Kotflügelgruppe (4) für Industriefahrzeuge, umfassend:
- einen Kotflügel (6), der die Form eines Kreisbogens aufweist und sich, bezogen auf eine Fahrtrichtung eines zuordenbaren Fahrzeugs, zwischen einem vorderen Ende (8) und einem hinteren Ende (12) erstreckt,
- einen Spritzschutz (16), der dem hinteren Ende (12) des Kotflügels (6) zugeordnet ist, wobei sich der Spritzschutz (16) entlang einer vertikalen Richtung (Y-Y) zwischen einem oberen Ende (24), von der Seite des hinteren Endes (12) des Kotflügels (6), und einem unteren Ende (28) erstreckt,
wobei der Spritzschutz (16) einstückig mit dem Kotflügel (6) co-geformt ist,
wobei sich der Kotflügel (6) um mindestens 120° zwischen dem vorderen Ende (8) und dem hinteren Ende (12) erstreckt,
wobei die Kotflügelgruppe **dadurch gekennzeichnet ist, dass** am oberen Ende (24) der Spritzschutz (16) mit dem Kotflügel (6) mittels eines Balgabschnitts (32) verbunden ist,
wobei der Balgabschnitt (32) eine Vielzahl von Wellungen (36) umfasst, die sich entlang einer Querrichtung (T-T) senkrecht zu der vertikalen Richtung (Y-Y) erstrecken.

2. Kotflügelgruppe (4) für Industriefahrzeuge nach Anspruch 1, wobei der Spritzschutz (16) an einer Innenseite (40), die einem zuordenbaren Rad des Industriefahrzeugs zugewandt ist, eine Vielzahl von Zapfen (44) umfasst, die gemäß einem sich wiederholenden Muster angeordnet sind.

3. Kotflügelgruppe (4) für Industriefahrzeuge nach Anspruch 2, wobei die Zapfen (44) ferner an einem Innenbereich (48) des Kotflügels (6) angeordnet sind, der dem zuordenbaren Rad des Industriefahrzeugs zugewandt ist, von der Seite des hinteren Endes (12) des Kotflügels (6).

4. Kotflügelgruppe (4) für Industriefahrzeuge nach Anspruch 3, wobei der Innenbereich (48) eine Erstreckung aufweist, die größer oder gleich derjenigen des Spritzschutzes (16) ist.

5. Kotflügelgruppe (4) für Industriefahrzeuge nach Anspruch 2, 3 oder 4, wobei die Zapfen (44) eine zylindrische oder kegelstumpfförmige Geometrie aufweisen.

6. Kotflügelgruppe (4) für Industriefahrzeuge nach Anspruch 5, wobei die Zapfen (44) Zylinder oder Kegelstümpfe mit rechteckigem oder quadratischem Querschnitt sind.

7. Kotflügelgruppe (4) für Industriefahrzeuge nach Anspruch 5, wobei die Zapfen (44) Zylinder oder Kegelstümpfe mit kreisförmigem Querschnitt sind.

8. Kotflügelgruppe (4) für Industriefahrzeuge nach einem der Ansprüche 2 bis 7, wobei die Zapfen (44) voneinander um einen Abstand beabstandet sind, der mindestens gleich ihrer Höhe ist, d. h. dem auskragenden Abschnitt in Bezug auf die Innenseite (40) des Spritzschutzes (16).

9. Kotflügelgruppe (4) für Industriefahrzeuge nach Anspruch 8, wobei der Spritzschutz (16) an der Innenseite (40) eine Vielzahl von Verstärkungsrippen (52, 56, 60) umfasst, wobei der Spritzschutz (16) vertikale Verstärkungsrippen (52, 56) parallel zu der vertikalen Richtung (Y-Y) und mindestens eine Quer-Verstärkungsrippe (52, 60), ausgerichtet entlang einer Querrichtung (T-T) senkrecht zu der vertikalen Richtung (Y-Y), umfasst.

10. Kotflügelgruppe (4) für Industriefahrzeuge nach Anspruch 9 in Kombination mit Anspruch 1, wobei sich die vertikalen Verstärkungsrippen (52, 56) bis zu dem Balgabschnitt (32) erstrecken.

11. Kotflügelgruppe (4) für Industriefahrzeuge nach einem der Ansprüche 1 bis 10, wobei der Spritzschutz (16) aus Gummi, PP, PVC, PE hergestellt ist.

12. Verfahren zur Herstellung einer Kotflügelgruppe (4) für Industriefahrzeuge, umfassend die Schritte:
- Spritzgießen eines Kotflügels (6), das die Form eines Kreisbogens aufweist und sich, bezogen auf eine Fahrtrichtung eines zuordenbaren Fahrzeugs, um mindestens 120° zwischen einem vorderen Ende (8) und einem hinteren Ende (12) erstreckt,
- wobei der Spritzgießschritt den Schritt des Co-Formens eines Spritzschutzes (16) umfasst, der dem hinteren Ende (12) des Kotflügels (6) zugeordnet ist, wobei sich der Spritzschutz (16) entlang einer vertikalen Richtung (Y-Y) zwischen einem oberen Ende (24), von der Seite des hinteren Endes (12) des Kotflügels (6), und einem unteren Ende (28) erstreckt,
wobei das Verfahren ferner den Schritt des Spritzgießens des Kotflügels (6) aus einem ersten Material und des Co-Spritzgießens des Spritzschutzes (16) aus einem zweiten Material, das sich von dem ersten Material unterscheidet, umfasst, wobei das erste Material ein PP ist und wobei das zweite Material ein Gummi, PP, PVC, PE ist.

13. Verfahren zur Herstellung einer Kotflügelgruppe (4) für Industriefahrzeuge nach Anspruch 12, umfassend den Schritt des Formens einer Kotflügelgruppe (4) nach einem der Ansprüche 1 bis 11.

## Revendications

1. Groupe de garde-boue (4) pour véhicules industriels, comprenant :
- un garde-boue (6) ayant la forme d'un arc de cercle et s'étendant, entre une extrémité avant (8) et une extrémité arrière (12), par rapport à une direction de déplacement d'un véhicule associable,
- une bavette (16) associée à ladite extrémité arrière (12) du garde-boue (6), la bavette (16) s'étendant le long d'une direction verticale (Y-Y) entre une extrémité supérieure (24), du côté de l'extrémité arrière (12) du garde-boue (6), et une extrémité inférieure (28), dans lequel la bavette (16) est co-moulée d'une seule pièce avec le garde-boue (6), dans lequel le garde-boue (6) s'étend sur au moins 120° entre lesdites extrémité avant (8) et extrémité arrière (12), le groupe de garde-boue étant **caractérisé en ce que**,
à ladite extrémité supérieure (24), la bavette (16) est reliée au garde-boue (6) au moyen d'une partie en soufflet (32),
dans lequel ladite partie en soufflet (32) comprend une pluralité d'ondulations (36) s'étendant le long d'une direction transversale (T-T) perpendiculaire à ladite direction verticale (Y-Y).

2. Groupe de garde-boue (4) pour véhicules industriels selon la revendication 1, dans lequel la bavette (16), au niveau d'un côté intérieur (40) faisant face à une roue de véhicule industriel associable, comprend une pluralité d'ergots (44) disposés selon un motif répétitif.

3. Groupe de garde-boue (4) pour véhicules industriels selon la revendication 2, dans lequel lesdits ergots (44) sont également disposés au niveau d'une zone intérieure (48) du garde-boue (6), faisant face à la roue de véhicule industriel associable, du côté de l'extrémité arrière (12) du garde-boue (6).

4. Groupe de garde-boue (4) pour véhicules industriels selon la revendication 3, dans lequel ladite zone intérieure (48) a une extension supérieure ou égale à la bavette (16).

5. Groupe de garde-boue (4) pour véhicules industriels selon la revendication 2, 3 ou 4, dans lequel lesdits ergots (44) ont une géométrie cylindrique ou tronconique.

6. Groupe de garde-boue (4) pour véhicules industriels selon la revendication 5, dans lequel lesdits ergots (44) sont des cylindres ou des troncs de cône de section rectangulaire ou carrée.

7. Groupe de garde-boue (4) pour véhicules industriels selon la revendication 5, dans lequel lesdits ergots (44) sont des cylindres ou des troncs de cône de section circulaire.

8. Groupe de garde-boue (4) pour véhicules industriels selon l'une quelconque des revendications 2 à 7, dans lequel lesdits ergots (44) sont espacés les uns des autres d'une distance au moins égale à leur hauteur, c'est-à-dire la partie en porte-à-faux par rapport au côté intérieur (40) de la bavette (16).

9. Groupe de garde-boue (4) pour véhicules industriels selon la revendication 8, dans lequel ladite bavette (16), au niveau dudit côté intérieur (40), comprend une pluralité de nervures de renfort (52,56,60), dans lequel la bavette (16) comprend des nervures de renfort verticales (52,56), parallèles à ladite direction verticale (Y-Y) et au moins une nervure de renfort transversale (52,60), dirigée le long d'une direction transversale (T-T) perpendiculaire à ladite direction verticale (Y-Y).

10. Groupe de garde-boue (4) pour véhicules industriels selon la revendication 9 en combinaison avec la revendication 1, dans lequel lesdites nervures de renfort verticales (52,56) s'étendent jusqu'à ladite partie en soufflet (32).

11. Groupe de garde-boue (4) pour véhicules industriels selon l'une quelconque des revendications 1 à 10, dans lequel la bavette (16) est en caoutchouc, PP, PVC, PE.

12. Procédé de fabrication d'un groupe de garde-boue (4) pour véhicules industriels, comprenant les étapes suivantes :
- moulage par injection d'un garde-boue (6) présentant la forme d'un arc de cercle et s'étendant, d'au moins 120°, entre une extrémité avant (8) et une extrémité arrière (12), par rapport à une direction de déplacement d'un véhicule associable, - dans lequel ladite étape de moulage par injection comprend l'étape de co-moulage d'une bavette (16) associée à ladite extrémité arrière (12) du garde-boue (6), la bavette (16) s'étendant le long d'une direction verticale (Y-Y) entre une extrémité supérieure (24), du côté de l'extrémité arrière (12) du garde-boue (6), et une extrémité inférieure (28), le procédé comprenant en outre l'étape de moulage par injection du garde-boue (6) dans un premier matériau et de co-moulage par injection de la bavette (16) dans un second matériau, différent du premier matériau, dans lequel ledit premier matériau est un PP et dans lequel ledit second matériau est un caoutchouc, PP, PVC, PE.

13. Procédé de fabrication d'un groupe de garde-boue (4) pour véhicules industriels selon la revendication 12, comprenant l'étape de moulage d'un groupe de garde-boue (4) selon l'une quelconque des revendications 1 à 11.
